# EUROPÄISCHE PATENTANMELDUNG

(11) **EP 4 461 457 A2**
(43) Veröffentlichungstag der Anmeldung: **13.11.2024**
(21) Anmeldenummer: 24174267.5
(22) Anmeldetag: 06.05.2024
(51) Int. Cl.: B23K 35/30, C22C 33/02, C22C 38/02, C22C 38/14, C22C 38/16

(54) **LOTZUSAMMENSETZUNG UND VERFAHREN ZU IHRER HERSTELLUNG**

(30) Priorität: 09.05.2023 DE 102023112096
(71) Anmelder: Fraunhofer-Gesellschaft zur Förderung der angewandten Forschung e.V., 80686 München (DE); UVR-FIA Verfahrensentwicklung -Umweltschutztechnik-Recycling-GmbH, 09599 Freiberg (DE); Stephan, Lutz, 02692 Großpostwitz OT Eulowitz (DE)
(72) Erfinder: Stephan, Lutz, 02692 Großpostwitz OT Eulowitz (DE); Martin, Hans-Peter, 01277 Dresden (DE); Steinborn, Clemens, 01277 Dresden (DE); Triebert, Anke, 01277 Dresden (DE); Kamptner, Andre, 09599 Freiberg (DE); Rittmeister, Ben, 09599 Freiberg (DE)
(74) Vertreter: Pfenning, Meinig & Partner mbB

(57) **Zusammenfassung**

Die Lotzusammensetzung besteht aus 65 Masse-% bis 80 Masse-% Fe, 12 Masse-% bis 32 Masse-% Si, 1 Masse-% bis 16 Masse-% Ti und 0,5 Masse-% bis 10 Masse-% Cu oder
aus 60 Masse-% bis 80 Masse-% Fe, 10 Masse-% bis 30 Masse-% Si, 1 Masse-% bis 18 Masse-% Ti und 0,5 Masse-% bis 10 Masse-% Cu.

## Beschreibung

Die Erfindung betrifft eine Lotzusammensetzung, die insbesondere zum Fügen und Metallisieren keramischer Bauteile eingesetzt werden kann, sowie ein Verfahren zu ihrer Herstellung.

Keramische Werkstoffe müssen für technische Bauteile oft mit anderen Komponenten kombiniert und stoffschlüssig verbunden werden. Dafür erforderliche Fügeverfahren müssen den Besonderheiten keramischer Werkstoffe Rechnung tragen.

Stoffschlüssige Fügemethoden, wie Schweißen oder Löten sind deutlich schwieriger zur realisieren als bei metallischen oder polymeren Werkstoffen. Insbesondere das Aktivlöten ist eine technisch umsetzbare Lösung, da die Benetzung der Aktivlote auf einer Keramikoberfläche über eine chemische Wechselwirkung und der Ausbildung einer Fügezone durch die genutzten Aktivkomponenten (Ti, Zr, Hf) möglich wird.

Allerdings gibt es nur wenige technisch ausgereifte Aktivlote zum Löten von Keramikkomponenten. Die bisher bekannten und verfügbaren Lote begrenzen die Einsatztemperatur für die Keramikverbunde auf < 600 °C- 800 °C, da die Lote erweichen. Dadurch können die gefügten Keramikkomponenten nur bis zu diesen Temperaturen genutzt werden.

Aktivlote zum Fügen von technischen Keramiken sind seit vielen Jahren bekannt. Auf dem Markt verfügbare Aktivlote basieren meistens auf Gold, Silber bzw. Silber-Kupfer-Legierungen mit einem Aktivelement aus der Gruppe Ti, Zr, Hf. Nachteilig für den Einsatz ist der Bedarf an Edelmetallen aus Kostengründen und die thermisch begrenzte mechanische Stabilität solcher Lote auf Einsatztemperaturen < 600 °C - 800 °C. Dadurch kann die thermische Belastbarkeit von keramischen Werkstoffen nicht voll ausgenutzt werden.

Zusätzlich werden seit einigen Jahren auch Lote auf Basis von edelmetallfreien Legierungen als Lote für Keramikbauteile angeboten. Dazu gehören Ti-Ni und Ti-Cu-Ni-Kombinationen. Allerdings zeigen solche Legierungen eine höhere Oxidationsempfindlichkeit und sind thermisch nicht stabiler als die edelmetallhaltigen Lote.

Die Aufgabe der Erfindung ist es daher, einen metallischen Legierungswerkstoff, der besonders zum Fügen keramischer Bauteile geeignet ist, vorzuschlagen, der keramische Oberflächen bei der erforderlichen Löttemperatur benetzt, wodurch zuverlässige Keramikfügeverbunde herstellbar sind, der bei technisch handhabbaren und für die Verbunde zulässigen Temperaturen (< 1400 °C) aufschmilzt, der unter technischen Gesichtspunkten oxidationsstabil an Luft ist und die technisch ausreichende mechanische Festigkeiten von so gefügten Keramikbauteilen bis mindestens 1000 °C erreicht werden kann.

Erfindungsgemäß wird diese Aufgabe mit einer Lotzusammensetzung, die die Merkmale des Anspruchs 1 aufweist, gelöst. Anspruch 4 betrifft ein Herstellungsverfahren für die Lotzusammensetzung. Vorteilhafte Ausgestaltungen und Weiterbildungen der Erfindung können mit in abhängigen Ansprüchen bezeichneten Merkmalen realisiert werden.

Eine erfindungsgemäße Lotzusammensetzung, die man auch als Legierung bezeichnen kann, besteht aus 65 Masse-% bis 80 Masse-% Fe, 12 Masse-% bis 32 Masse-% Si, 1 Masse-% bis 16 Masse-% Ti und 0,5 Masse-% bis 10 Masse-% Cu für einen ersten eutektischen Bereich oder
aus 60 Masse-% bis 80 Masse-% Fe, 10 Masse-% bis 30 Masse-% Si, 1 Masse-% bis 18 Masse-% Ti und 0,5 Masse-% bis 10 Masse-% Cu für einen zweiten eutektischen Bereich.

Vorteilhaft kann die erfindungsgemäße Lotzusammensetzung aus 67 Masse-% bis 77 Masse-% Fe, 17 Masse-% bis 27 Masse-% Si, 1 Masse-% bis 10 Masse-% Ti und 0,5 Masse-% bis 10 Masse-% Cu (erster eutektischer Bereich)
oder
aus 65 Masse-% bis75 Masse-% Fe, 15 Masse-% bis 25 Masse-% Si, 2 Masse-% bis 5 Masse-% Ti und 1 Masse-% bis 5 Masse-% Cu und ganz besonders vorteilhaft aus 80 Masse-% bis 82 Masse-% Fe, 12 Masse-% bis 14 Masse-% Si, 4 Masse-% bis 6 Masse-% Ti und 0,5 Masse-% bis 2 Masse-% Cu (zweiter eutektischer Bereich)
   oder
aus 70 Masse-% bis 74 Masse-% Fe, 16 Masse-% bis 18 Masse-% Si, 6 Masse-% bis 8 Masse-% Ti und 0,5 Masse-% bis 2 Masse-% Cu bestehen.

Am günstigsten ist es, wenn Kupfer mit einem Anteil von maximal 1,5 Masse-% enthalten ist.

Für die Herstellung der Lotzusammensetzung kann man eine Legierung einsetzen, die aus reinem Fe, reinem Si, reinem Ti und reinem Cu gebildet ist.

Zur Herstellung der Lotzusammensetzung ist es notwendig eine Eisen-Silicium-Legierung und eine Eisen-Titan-Legierung und reines Kupfer oder reines Fe, eine Eisen-Silicium-Legierung, eine Silicium-Titan-Legierung, reines Ti und reines Kupfer oder
reines Fe, eine Eisen-Silicium-Legierung, eine Silicium-Titan-Legierung, eine Eisen-Titan-Legierung und reines Kupfer oder
reines Fe und reines Si, reines Ti, eine Eisen-Silicium-Legierung, eine Silicium-Titan-Legierung und/oder mindestens eine intermetallische Verbindung, in der Silicium und Fe oder Ti enthalten ist, und reines Kupfer einzusetzen. Dabei sollten die Anteile der einzelnen unterschiedlichen Komponenten in der jeweiligen Lotzusammensetzung so gewählt werden, dass die Anteile an Fe, Si, Ti und Kupfer in den Ansprüchen 1 bis 3 eingehalten werden. Nur durch den Einsatz bereits vorlegierter Mischungen oder silicidischer Verbindungen können für das vorgeschlagene Stoffsystem zum Löten geeignete Löttemperaturen < 1400 °C genutzt werden.

Bevorzugt ist es für die Herstellung der Lotzusammensetzung ein entsprechendes Pulvergemisch der jeweiligen Metalle, Legierungen und/oder intermetallischen Verbindungen einzusetzen.

Der Einsatz der reinen chemischen Elemente ist insofern etwas nachteilig, da die Schmelzpunkte Ts dieser chemischen Elemente weit auseinanderliegen. Ts (Si) = 1410 °C, Ts(Fe) = 1538 °C, Ts(Ti) = 1668 °C. Beim Vorliegen einer Pulvermischung dieser Bestandteile ist ein vollständiges Aufschmelzen erst bei der höchsten Schmelztemperatur der Einzelkomponenten sicher erreichbar. Auch wenn beim Auftreten der ersten Schmelze von Silicium Lösungsvorgänge des Si mit Fe und Ti erwartet werden können, benötigen solche Auflösungen bzw. Reaktionen Zeit, so dass zumindest eine zeitliche Verzögerung eines erwünschten Lötprozesses auftritt. Für die Ausführung eines Lötprozesses ist es deshalb vorteilhaft, wenn man bereits Legierungen oder intermetallischen Verbindungen aus dem System Fe-Si-Ti nutzt, bei denen die Schmelztemperaturen ähnlich sind, so dass man Bestandteile mit hohem Schmelzpunkt nur in kleinen Anteilen oder gar nicht einsetzen muss, um die gewünschte Lotzusammensetzung zu erhalten. Aus wirtschaftlichen Gründen vorteilhaft ist es, wenn leicht verfügbare Fe-Si-, Ti-Si- oder Ti-Fe-Verbindungen oder Legierungen als Pulverausgangsstoffe zur Herstellung einer Lotmischung verwendet werden. Beispielsweise können kommerziell verfügbare metallurgische Rohstoffe, wie FeSi65, FeSi75, FeTi70, SiTi oder als intermetallische Verbindungen, wie Silicide insbesondere FeSi₂, FeSi, TisSis, TiSi₂ sein. Mit dem Einsatz solcher Rohstoffe kann ein großer Teil des aus mehreren unterschiedlichen Pulvern gemischten Lots bereits bei moderaten Temperaturen < 1400 °C aufgeschmolzen werden und verbleibende Reste werden in relativ kurzer Zeit in einer bereits gebildeten Schmelze aufgelöst. Für ein vollständiges Aufschmelzen des Lotpulvergemischs ist es vorteilhaft, wenn die Lotzusammensetzung im Zusammensetzungsbereich mit Anteilen der einzelnen unterschiedlichen Pulver gewählt wird, mit denen ein Eutektikum zumindest annähernd erreicht wird. Dadurch bleibt das zum Aufschmelzen erforderliche Temperaturfenster klein und der Schmelzvorgang benötigt nur wenig Zeit, was für die stoffschlüssige Verbundherstellung vorteilhaft ist. Deshalb ist es Gegenstand dieser Erfindung, dass geeignete Ausgangsrohstoffe in einer für den Schmelzvorgang vorteilhaften Zusammensetzung, Korngrößenverteilung und mit homogener Mischung als Lotpulvermischung eingesetzt werden können. Durch diese Konstellation ist es nicht erforderlich zur Lotherstellung eine kostenaufwendige metallurgische Schmelze herzustellen, die anschließend entweder zu einem Pulver zerkleinert werden muss oder in für den Fügeprozess geeignete Formen, wie z.B. einem Draht oder einer Folie durch Umformprozesse gebracht werden muss.

Zusätzlich ist es für die Eigenschaften der Lotzusammensetzung auf Basis von Fe-Si-Ti vorteilhaft, wenn geringe Anteile von Kupfer der Pulvermischung zugesetzt werden. Diese erhöhen die Duktiliät des Lotwerkstoffs, so dass Ausdehnungsunterschiede zwischen der Keramik und dem Lot durch plastische Verformungen im Lot kompensiert bzw. abgebaut werden können.

Die Pulvermischungen orientieren sich an den eutektischen Zusammensetzungen, wobei diese Bedingung nicht unbedingt für eine Verbundherstellung eingehalten werden muss und geringfügige Abweichungen von eutektischen Verhältnissen ohne weiteres zulässig sind. Die Eigenschaften des Lotes können über die Zusammensetzung in bestimmten Bereichen gesteuert werden, so dass auch die Eigenschaften der Verbunde entsprechend variieren.

Für die Herstellung kann man beispielsweise Eisen-Silicium-Legierungen einsetzen, in denen Silicium mit 65 Masse-% bzw. 70 Masse-%, 75 Masse-% oder eine Eisen-Titan-legierung, die mit 70 Masse-% Titan gebildet ist. Um die jeweiligen Anteile an Fe, Si und/oder Ti zu erreichen, kann man allein zu Si und Ti auch geeignete intermetallische Verbindungen, insbesondere Silizide in Verbindung mit reinem Fe zur Herstellung einer geeigneten Lotzusammensetzung mit den günstigen Anteilen von Fe, Si, Ti und Cu einsetzen. Kann man die erforderlichen Anteile an Fe, Si und Ti nicht durch entsprechende Anteile dieser Metalle in der mindestens einen intermetallischen Verbindung erreichen, sollte man die fehlenden Anteile mit dem entsprechenden reinen Metall oder mittels einer entsprechend ausgewählten Legierung erreichen können.

Wird eine mit Silicium oder Titan vorlegierte Eisenlegierung bzw. mindestens ein Silizid als Vorprodukt für die Herstellung der Lotzusammensetzung eingesetzt, wirkt sich deren abgesenkte Schmelztemperatur vorteilhaft aus.

In den reinen Metallen und auch in den ggf. eingesetzten Legierungen sollen Verunreinigungen nur mit einem Anteil von maximal 1 Masse-%, bevorzugt maximal 0,5 Masse-% enthalten sein dürfen.

Für die Herstellung ist es vorteilhaft, wenn die Metalle und ggf. auch die für die Herstellung eingesetzten Legierungen zu einem Pulver gemeinsam vermahlen und dabei homogen vermischt werden, bevor eine Verarbeitung durch Löten oder eine Legierung der vollständigen Lotzusammensetzung nach einem Schmelzen der einzelnen Komponenten hergestellt worden ist. Die Lotzusammensetzung kann als Pulvergemisch, Pulvergemisch in einer Paste oder als durch Schmelzen erhaltene Legierung zum Löten eingesetzt werden.

Es konnten im System Fe-Ti-Si-Zusammensetzungen im Bereich ternärer Eutektika ermittelt werden, die Schmelztemperaturen <1400 °C aufweisen und sich zusätzlich hinsichtlich ihrer Oxidationsstabilität herausheben. Diese Anforderungen konnten mit Legierungen mit den eutektischen Zusammensetzungen Fe 72 at-% (82 Masse-%), Si 22 at-% (12 Masse-%), Ti 6 at-% (6 Masse-%) und der zweiten Zusammensetzung Fe 62 at-% (74 Masse-%), Si 30 at-% (18 Masse-%), Ti 8 at-% (8 Masse-%) erfüllt werden. Bei diesen zwei Lotzusammensetzungen handelt es sich um zwei unterschiedliche eutektische Fe-Si-Ti-Legierungen, deren Gesamtzusammensetzung lediglich dem jeweils enthaltenen Anteil an Cu berücksichtigend angepasst werden muss.

Einer Verbundherstellung mit Keramiken stehen allerdings der hohe thermische Ausdehnungskoeffizient und die Ausbildung von spröden intermetallischen Phasen von reinen Fe-Si-Ti-Legierungen entgegen. Die Zugabe geringer Mengen an Cu zu einer solchen Legierung verbessert die plastische Verformbarkeit der Lote. Der Kupferzusatz verändert sowohl das Schmelzverhalten der jeweiligen Lotlegierung, wie auch deren Verformbarkeit und damit die Festigkeit der hergestellten Verbunde. Dabei ist die Einstellung der vorteilhaften Cu-Additivmenge für die Qualität der hergestellten Verbunde von Bedeutung.

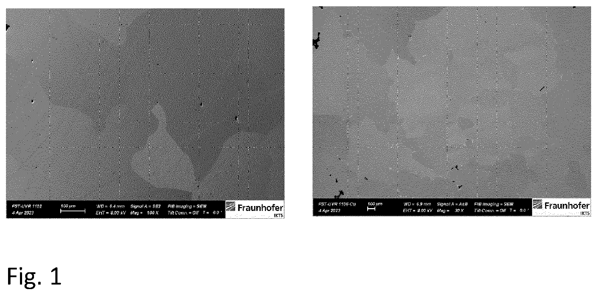

Figur 1 zeigt: die Einlagerung von Cu in das Gefüge einer Lotschicht, die mit einer erfindungsgemäßen Lotzusammensetzung hergestellt worden ist rechte Darstellung), im Vergleich zu einer Fe-Si-Ti-Lotschicht ohne Kupferzusatz (linke Darstellung) als FESEM-Aufnahmen. Dabei wurde für die herkömmliche Lotschicht Fe mit 82 Masse-%, Si mit 12 Masse-% und Ti mit 6 Masse-% eingesetzt. Bei der erfindungsgemäßen Lotschicht enthielt die Lotzusammensetzung zusätzlich 4 Masse-% Cu, die auf die Gesamtmenge an Fe, Si und Ti der herkömmlichen Lotzusammensetzung bezogen sind, die in der linken Darstellung gezeigt ist.

Die Herstellung einer erfindungsgemäßen Lotzusammensetzung kann mittels Zerkleinerung der genutzten Rohstoffpulver auf Partikelgrößen < 100 µm erfolgen. Dieses erfolgt über übliche Anlagen zur Pulveraufbereitung entsprechend den Eigenschaften der Rohstoffe. Eine erste Zerkleinerungsstufe kann über Brecher soweit erforderlich vorgenommen werden. Dann kann eine Mahlung bzw. Mischung in Kugelmühlen oder Schwingmühlen durchgeführt werden. Die erhaltenen Pulver können mittels Siebung von verbliebenen Überkornfraktionen getrennt und homogen vermischt werden. Die Verwendung als Lot kann auch über die Herstellung üblicher Pasten mit geeigneten organischen Bindern erfolgen.

Die Pasten können auf die zu fügenden Oberflächen der jeweiligen Komponente(n) mittels Siebdruck, Spatel oder Pinsel gleichmäßig entsprechend den bekannten Techniken aufgetragen und ggf. vor dem Lötprozess getrocknet werden.

Der Lötprozess kann unter Vakuum oder Schutzgas durchgeführt werden. Die Löttemperaturen sollten entsprechend der spezifischen Lotzusammensetzung in einem Bereich zwischen 1200 °C - 1500 °C eingestellt werden. Die bevorzugten eutektischen Zusammensetzungen erfordern eine Löttemperatur zwischen 1300 °C - 1400 °C.

Das Aufheizregime bis zur Löttemperatur hängt wesentlich von den zu fügenden Komponenten ab. Große Volumina oder Massen erfordern ein langsameres Aufheizen, um das Erreichen der notwendigen Löttemperaturen sicherzustellen. Kleinere Bauteile können deutlich schneller aufgeheizt werden. Nutzbare Aufheizgeschwindigkeiten liegen zwischen 2 K·min⁻¹- 20 K·min⁻¹. Haltezeiten sind prinzipiell nicht erforderlich, können aber aus produktspezifischen Gründen vorgesehen werden.

Die Benetzbarkeit der so zusammengesetzten Lote ist insbesondere bei Carbidkeramiken hervorragend. Oxidische und nitridische Keramikwerkstoffe werden etwas schlechter benetzt. Mit der Wahl geeigneter Lötparameter gelingt dies aber auch für diese Werkstoffe bei der Herstellung von Verbunden keramischer Bauteile.

Es können Bauteile aus keramischen oder auch keramischen Verbundwerkstoffen mit solchen edelmetallfreien Lotzusammensetzungen miteinander stoffschlüssig verbunden werden.

Es ist auch eine Erhöhung der Einsatztemperatur für die so verbundenen Bauteile auf bis zu 1000 °C möglich. Diese Lotzusammensetzungen sind bis zu 1000 °C oxidationsstabil und es kann eine Biegebruchfestigkeit der Verbunde bis zu 100 MPa auch bei Temperaturen > 600 °C erreicht werden.

Die Herstellung von Keramikverbunden für Bauteile mit thermischen Belastungen, korrosiver Beanspruchung oder Oxidation im Temperaturbereich < 1000 °C ist daher möglich. Sie kann auch für einen Einsatz als elektrische Kontaktierung oder Metallisierung für funktionelle Komponenten genutzt werden. Die Erfindung stellt eine kostengünstige Alternative zu edelmetallhaltigen Loten insbesondere in Verbindung mit Carbidkeramiken dar.

Erfindungsgemäße Lotzusammensetzungen des ersten eutektischen Bereichs können beispielsweise mit folgenden Zusammensetzungen hergestellt werden:
Reines Fe 81,82 Masse-%, reines Silicium 12,57 Masse-% und 5,6 Masse-% reines Ti,
73,03 Masse-% reines Fe, einer FeSi65-Legierung mit 19,30 Masse-% und einer FeTi70 -Legierung,
reinem Fe mit 81,83 Masse-%, 16,73 Masse-% FeSi75-Legierung und 8,00 Masse-% FeTi70,
81,83 Masse-% reinem Fe, 16,73 Masse-% einer SiTi-Legierung, in der 26 Masse-% Titan enthalten sind, und 1,19 Masse-% oder
80,75 Masse-% reines Fe, 1,41 Masse-% FeSi65- Legierung, 15,74 SiTi-Legierung, in der 26 Masse-% Ti enthalten sind und 2,16 Masse-% FeTi70-Legierung.

Geeignete Lotzusammensetzungen des zweiten eutektischen Bereichs können beispielsweise mit folgenden Zusammensetzungen hergestellt werden:
Reines Fe mit 74,11 Masse-%, reines Si mit 18,04 Masse-% und reines Ti mit 7,85 Masse-%,
reines Fe mit 61,55 Masse-%, 27,7 Masse-% einer FeSi65-Legierung und 11,22 Masse-% einer SiTi70-Legierung,
reines Fe mit 65,21 Masse-%, 24,01 Masse-% einer FeSi75-Legierung, 11,21 Masse-% einer FeTi70-Legierung,
reines Fe mit 74,11 Masse-%, 24,38 Masse-% einer SiTi-Legierung, in der 26 Masse-% Ti enthalten sind und 1,51 reines Ti oder
73,51 Masse-% reines Fe, 24,83 einer SiTi-Legierung, in der 26 Masse-% Ti enthalten sind und 2,16 Masse-% einer FeTi70-Legierung.

Den so vorbereiteten Zusammensetzungen, der beiden eutektischen Bereiche kann man Cu in einer Menge zugeben, so dass sich ein Anteil von 0,5 Masse-% bis 10 Masse-%, bevorzugt von 1 Masse-% bis 5 Masse-%, besonders von 1,5 Masse-% Cu in einer erfindungsgemäßen Lotzusammensetzung ergibt.

Nachfolgend soll die Erfindung beispielhaft erläutert werden.

Als Ausgangsstoffe werden ein Reineisenpulver mit Partikelgrößen d₅₀ < 0,15 mm (63 µm-100 µm) und einem Eisengehalt von 98 Masse-%, eine Vorlegierung FeSi65mit einer mittleren Partikelgröße d₅₀ < 40 mm und einer Vorlegierung FeTi70 mit einer mittleren Partikelgröße d₅₀ < 20 mm ausgewählt. Diese Ausgangspulver werden einer Vorzerkleinerung mit einem Backenbrecher und einem weiteren Zerkleinerungsprozess in einer Schwingmühle unterzogen. Die zerkleinerten Pulver werden mittels Siebung fraktioniert und nur Fraktionen mit mittleren Partikelgrößen d₅₀ < 45 µm ausgewählt. Die entsprechend aus dem so zerkleinerten Ausgangspulver gebildete Pulvermischung wird mit einem Mischer unter inerter Atmosphäre trocken miteinander homogen in den für die Lotzusammensetzung gewünschten Anteilen gemischt. Beispielsweise ist eine geeignete Zusammensetzung:
- Fe 73,6 Masse-%
- FeSi65 18,64 Masse-%
- FeTi70 7,86 Masse-%
   oder
- Fe 62,52 Masse-%
- FeSi65 26,76 Masse-%
- FeTi70 11,0 Masse-%

Eine Mischdauer von 30 min ist ausreichend, um eine homogene Verteilung der einzelnen Komponenten zu erreichen.

Die so erhaltene Pulvermischung wird mit organischen Hilfsstoffen in einem Mischer vermischt. Dazu werden 20 Masse-% Binder, bezogen auf die Metallpulvermasse, bestehend aus:
- 30 Masse-% n-Buthyl-Methaacrylat
- 70 Masse-% Texanol (Isobuttersäure, Monoester mit 2,2,4-Trimethylpentan-1,3-diol)
der Pulvermischung zu gegeben.

Für die Durchführung der Lötversuche an Bauelementen aus SiC werden die zu verbindenden Siliciumcarbidbauelemente an den zu fügenden Oberflächen mit Alkohol und Aceton von Verunreinigungen befreit. Für die Bestimmung von mechanischen Festigkeitswerten werden in diesem Beispiel halbe Biegebruchstäbe aus S-SiC mit einer Verdichtung von 98 % und einem Borgehalt von < 1 Masse-% mit den Abmessungen 3 × 4 × 25 mm verwendet. Die Querschnittsfläche 3 × 4 mm² wird entsprechend gereinigt und danach wird die erhaltene Metallpulverpaste mit einem Spatel auf die gereinigten Querschnittsflächen aufgetragen. Zwei Biegebruchstabhälften werden an den mit Lotpaste versehenen Querschnittsflächen zusammengesetzt. Die so zu einer Länge von 50 mm gefügten Stäbe als zu verbindende Bauelemente werden in eine passende Halterung gesetzt und die Paste trocknet an Luft zunächst ca. 8 h bei Raumtemperatur. Danach werden die Pasten abschließend über 2 h in einem Trockenschrank bei 180 °C getrocknet.

Die so vorbereiteten Stäbe werden in eine Halterung aus Aluminiumoxid gelegt und damit in einen geeigneten Lötofen gestellt. Der ausgewählte Lötofen sollte eine Maximaltemperatur von 1400 °C erreichen und einen Betrieb unter Vakuum oder Inertgas zulassen.

Die beschriebenen Proben wurden mit 5 K/min auf 1000 °C aufgeheizt und bei dieser Temperatur 15 min gehalten. Als Ofenatmosphäre wurde während dieses Aufheizvorgangs Vakuum bis zu einem Ofeninnendruck von 10⁻⁵ mbar gewählt. Der Vakuumdruck wurde innerhalb von 10 min während des Aufheizvorgangs erreicht. Nach der Haltezeit erfolgte die Umstellung auf Argon. Das anschließende Aufheizen bis zur Zieltemperatur erfolgte mit 10 K/min bis zu 1350 °C. Diese Temperatur wurde 30 min gehalten. Danach erfolgte ein schnelles Abkühlen entsprechend der Ofencharakteristik. Der Ofen konnte nach einer Abkühlzeit von 10 h geöffnet werden. Die Proben im Ofen waren zu diesem Zeitpunkt auf die Raumtemperatur zwischen 18 °C-25 °C abgekühlt. Die Stabhälften waren nach dieser Prozedur durch die Lotverbindung mechanisch stabil verbunden.

Die erhaltenen Stabverbunde wurden entsprechend DIN 843/1 einer Messung der Biegebruchfestigkeit unterzogen. Die Messungen wurden bei Raumtemperatur durchgeführt.

Die Raumtemperaturfestigkeitsmessung ergab Werte zwischen 30 MPa-120 MPa für die beschriebenen Biegebruchstäbe.

## Patentansprüche

1. Lotzusammensetzung, bestehend aus 65 Masse-% bis 80 Masse-% Fe, 12 Masse-% bis 32 Masse-% Si, 1 Masse-% bis 16 Masse-% Ti und 0,5 Masse-% bis 10 Masse-% Cu oder
aus 60 Masse-% bis 80 Masse-% Fe, 10 Masse-% bis 30 Masse-% Si, 1 Masse-% bis 18 Masse-% Ti und 0,5 Masse-% bis 10 Masse-% Cu, wobei in der Lotzusammensetzung Verunreinigungen mit einem Anteil von maximal 1 Masse-% enthalten sind.

2. Lotzusammensetzung nach Anspruch 1, **dadurch gekennzeichnet, dass** die Lotzusammensetzung aus 67 Masse-% bis 77 Masse-% Fe, 17 Masse-% bis 27 Masse-% Si, 1 Masse-% bis 10 Masse-% Ti und 0,5 Masse-% bis 10 Masse-% Cu
oder
aus 65 Masse-% bis 75 Masse-% Fe, 15 Masse-% bis 25 Masse-% Si, 2 Masse-% bis 5 Masse-% Ti und 0,5 Masse-% bis 5 Masse-% Cu besteht.

3. Lotzusammensetzung nach einem der vorhergehenden Ansprüche, **dadurch gekennzeichnet, dass** die Lotzusammensetzung aus 80 Masse-% bis 82 Masse-% Fe, 12 Masse-% bis 14 Masse-% Si, 4 Masse-% bis 6 Masse-% Ti und 0,5 Masse-% bis 5 Masse-% Cu
oder
aus 70 Masse-% bis 74 Masse-% Fe, 16 Masse-% bis 18 Masse-% Si, 6 Masse-% bis 8 Masse-% Ti und 0,5 Masse-% bis 2 Masse-% Cu besteht.

4. Verfahren zur Herstellung einer Lotzusammensetzung nach einem der vorhergehenden Ansprüche, **dadurch gekennzeichnet** oder
die Lotzusammensetzung mit reinem Eisen, reinem Silicium, reinem Titan und reinem Kupfer oder
einer Eisen-Silicium-Legierung und einer Eisen-Titan-Legierung und reinem Kupfer oder
reinem Fe, einer Eisen-Silicium-Legierung, einer Silicium-Titan-Legierung, reinem Titan und reinem Kupfer oder
reinem Fe, einer Eisen-Silicium-Legierung, einer Silicium-Titan-Legierung, einer Eisen-Titan-Legierung und reinem Kupfer oder reinem Fe und Si, Ti einer Eisen-Silicium-Legierung, einer Silicium-Titan-Legierung und/oder mindestens eine intermetallische Verbindung, in der Silicium und Fe oder Ti enthalten ist, und reinem Kupfer so hergestellt wird, dass die in den Ansprüchen 1 bis 3 genannten Anteilsverhältnisse der Metalle in der Lotzusammensetzung eingehalten werden, wobei
in der Lotzusammensetzung Verunreinigungen mit einem Anteil von maximal 1 Masse-% enthalten sind.

5. Verfahren nach dem vorhergehenden Anspruch, **dadurch gekennzeichnet, dass** für die Herstellung ein Pulvergemisch der jeweiligen Metalle, Legierungen und/oder intermetallischen Verbindungen eingesetzt wird.
